# EUROPÄISCHE PATENTSCHRIFT

(11) **EP 3 080 466 B1**
(45) Veröffentlichungstag und Bekanntmachung des Hinweises auf die Patenterteilung: **30.05.2018**
(21) Anmeldenummer: 14809321.4
(22) Anmeldetag: 01.12.2014
(51) Int. Cl.: F16C 33/04, F16C 33/12, F16C 33/10, F16C 17/02

(54) **LAGERBAUTEIL MIT DIAMANTINNENBESCHICHTUNG**
BEARING COMPONENT COMPRISING AN INNER DIAMOND COATING
ÉLÉMENT DE PALIER POURVU D'UN REVÊTEMENT INTÉRIEUR EN DIAMANT

(30) Priorität: 10.12.2013 DE 102013225398
(43) Veröffentlichungstag der Anmeldung: 19.10.2016
(73) Patentinhaber: EagleBurgmann Germany GmbH & Co. KG, 82515 Wolfratshausen (DE)
(72) Erfinder: OTSCHIK, Joachim, 82547 Beuerberg (DE); BERGER, Wolfgang, 83671 Benediktbeuern (DE); RIEGER, Michael, 82544 Egling-Deining (DE); PEHL, Andreas, 85586 Poing (DE)
(74) Vertreter: Hoefer & Partner Patentanwälte mbB
(86) Internationale Anmeldenummer: PCT/EP2014/076057
(87) Internationale Veröffentlichungsnummer: WO 2015/086356

(56) Entgegenhaltungen:
- DE-A1-102009 060 924
- DE-C- 339 649

## Beschreibung

Die vorliegende Erfindung betrifft ein Lagerbauteil mit einer Innenlagerfläche, welche eine Diamantbeschichtung aufweist.

Aus dem Stand der Technik ist es grundsätzlich bekannt, Gleitringe und dergleichen von außen mit einer Diamantbeschichtung zu versehen. Dies wird üblicherweise mittels eines CVD-Verfahrens ausgeführt. Problematisch ist jedoch die Beschichtung von inneren Flächen mit Diamant, beispielsweise an einem Lager. Aus der DE 108 09 675 C1 ist eine Vorrichtung und ein Verfahren zum Aufbringen von Diamantschichten an rohrförmigen Hohlkörpern begrenzter Länge bekannt. Hierbei werden Filamente durch die Hohlkörper hindurchgeführt, welche die Ablagerung von Diamantpartikeln an den zu beschichtenden Innenflächen bewirken sollen. Eine mit diesem Verfahren durchgeführte Diamantbeschichtung ergibt eine homogene Diamantschicht an der Innenfläche des Hohlkörpers. Ferner ist aus der DE 339 649 C ein Lagerbauteil gemäß dem Oberbegriff des Anspruches 1 bekannt.

Es ist Aufgabe der vorliegenden Erfindung, ein Lagerbauteil bereitzustellen, welches bei einfachem Aufbau und einfacher, kostengünstiger Herstellbarkeit eine hydrodynamische Optimierung aufweist. Insbesondere soll ein erfindungsgemäßes Lagerbauteil neben einer sehr langen Lebensdauer auch beim Anlaufen eine möglichst geringe Reibung aufweisen.

Diese Aufgabe wird durch ein Lagerbauteil mit den Merkmalen des Anspruchs 1 gelöst. Die Unteransprüche zeigen jeweils bevorzugte Ausgestaltungen der Erfindung.

Das erfindungsgemäße Lagerbauteil mit den Merkmalen des Anspruchs 1 weist den Vorteil auf, dass eine hydrodynamische Optimierung einer an einer Innenlagerfläche vorgesehenen Diamantbeschichtung möglich ist. Insbesondere ermöglicht das erfindungsgemäße Lagerbauteil, dass eine Vielzahl von Start-/Stopp-Vorgängen ausführbar ist, ohne dass ein hoher Verschleiß an der Diamantbeschichtung auftritt. Dadurch weist das erfindungsgemäße Lagerbauteil eine lange Lebensdauer auf. Dies wird erfindungsgemäß dadurch erreicht, dass das Lagerbauteil eine in einem Basiskörper vorgesehene Öffnung mit einer diamantbeschichteten Innenlagerfläche aufweist. Die Diamantbeschichtung der Innenlagerfläche weist dabei längliche Vertiefungen auf, welche im Wesentlichen in Längsrichtung der Öffnung im Basiskörper verlaufen. Die länglichen Vertiefungen sind dabei in der Diamantbeschichtung selbst vorgesehen. Die länglichen Vertiefungen verlaufen somit im Wesentlichen senkrecht zur Umfangsrichtung der Innenlagerfläche, d.h., in Axialrichtung des Lagerbauteils. Die länglichen Vertiefungen werden dabei durch im Wesentlichen lineare Kristallstrukturen erreicht. Dadurch gelingt es sehr effektiv und unerwartet, dass ein Druckgradient bei einem Anlaufen des Lagers ermöglicht wird, welcher eine Abhebedrehzahl bis zum vollen hydrodynamischen Betrieb deutlich reduziert. Mit anderen Worten ist die Drehgeschwindigkeit, bei welcher die Reibung von der ursprünglichen Haftreibung im Stillstand des Lagers über die Grenzreibung bis zur vollständigen Flüssigkeitsreibung übergeht, signifikant geringer als im Stand der Technik. Auch ergibt sich durch das frühere Abheben des rotierenden Bauteils von der Lagerfläche ein deutlich reduzierter Verschleiß, so dass die Lebensdauer des Lagerbauteils signifikant erhöht werden kann. Weiter ist eine Breite der länglichen Vertiefungen, welche in Umfangsrichtung der Öffnung ermittelt wird, kleiner als eine durchschnittliche Breite der Diamantkristalle an der Oberfläche der Diamantbeschichtung. Dadurch wird ein schmaler länglicher Kanal durch die länglichen Vertiefungen der Diamantbeschichtung bereitgestellt.

Die Öffnung im Basiskörper ist vorzugsweise eine Durchgangsöffnung.

Weiter bevorzugt verlaufen die länglichen Vertiefungen in der Diamantbeschichtung durchgehend von einer ersten Seite bis zu einer zweiten Seite der Öffnung. Dies unterstützt den Druckaufbau während eines Anlaufvorgangs am Lagerbauteil, so dass besonders schnell eine reibungsarme Flüssigkeitsreibung im Lagerbauteil aufbaubar ist.

Weiter bevorzugt kreuzen sich die länglichen Vertiefungen in der Diamantbeschichtung nicht. Besonders bevorzugt sind die länglichen Vertiefungen dabei im Wesentlichen parallel ausgebildet. Da die länglichen Vertiefungen durch Kristallstrukturen der Diamantbeschichtung gebildet werden, weisen die länglichen Vertiefungen keine geradlinigen Wände oder dergleichen auf, so dass erfindungsgemäß der Begriff im Wesentlichen parallel verlaufend verwendet wird.

Weiter bevorzugt weisen benachbarte längliche Vertiefungen in der Diamantbeschichtung in Umfangsrichtung der Öffnung ungefähr gleiche Abstände auf. Hierdurch wird ein schneller Druckaufbau beim Anlaufen eines im Lagerbauteil angeordneten rotierenden Bauteils in allen Positionen möglich.

Weiter bevorzugt ist ein Verhältnis einer Tiefe zu einer Breite der länglichen Vertiefung ungefähr zwei. Besonders bevorzugt beträgt die Tiefe der länglichen Vertiefungen ungefähr 2 µm. Weiter bevorzugt beträgt eine Breite der länglichen Vertiefungen ungefähr 1 µm. Weiter bevorzugt beträgt eine Dicke der Diamantbeschichtung ungefähr 8 µm bis 20 µm.

Gemäß einer weiteren bevorzugten Ausgestaltung der vorliegenden Erfindung sind die Breite der länglichen Vertiefungen in der Diamantbeschichtung und die Tiefe der länglichen Vertiefungen in der Diamantbeschichtung im Wesentlichen konstant. Auch hierzu sei angemerkt, dass der Begriff "im Wesentlichen" durch die Kristallform der Oberflächenbeschichtung aus Diamant bedingt ist, da hier keine exakten Maße im µm-Bereich vorgebbar sind.

Die länglichen Vertiefungen sind bei einem Anlaufen eines rotierenden Bauteils im Lagerbauteil vorzugsweise mit einem Schmiermedium, beispielsweise einem Fluid, gefüllt, so dass beim Anlaufvorgang durch die Rotation des rotierenden Bauteils das in den länglichen Vertiefungen vorhandene Schmierfluid einen Schmierfluidwall bildet, so dass sich durch den Anlaufvorgang mitgerissene Fluidmoleküle an dem Schmierfluidwall aufstauen und das Lager somit schnell in den Zustand der Flüssigkeitsreibung übergeht.

Das Lagerbauteil ist vorzugsweise aus SiC oder WC hergestellt.

Weiter bevorzugt ist die gesamte Öffnung des Basiskörpers mit Diamant beschichtet.

Gemäß einer besonders bevorzugten Ausgestaltung der vorliegenden Erfindung ist das Lagerbauteil als Radialgleitlager ausgebildet.

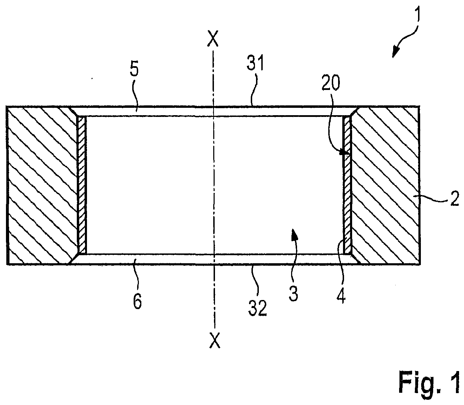

Die Erfindung wird nachfolgend unter Bezugnahme auf die begleitende Zeichnung im Detail beschrieben, wobei in der Zeichnung
- Figur 1: eine schematische Schnittansicht eines erfindungsgemäßen Lagerbauteils zeigt und
- Figur 2: eine schematische Draufsicht der Oberfläche der Diamantbeschichtung der Innenlagerfläche einer Öffnung des Lagerbauteils zeigt.

Wie aus der Schnittansicht eines Lagerbauteils 1 gemäß der vorliegenden Erfindung ersichtlich ist, umfasst das Lagerbauteil 1 einen Basiskörper 2 mit einer Öffnung 3. Die Öffnung 3 dieses Ausführungsbeispiels ist als Durchgangsöffnung ausgebildet.

Die Öffnung 3 ist zylindrisch vorgesehen und weist an einer Innenlagerfläche 20 des Basiskörpers 2 eine Diamantbeschichtung 4 auf. Die Diamantbeschichtung 4 ist an der gesamten Innenlagerfläche 20 der Öffnung 3 ausgebildet.

Die Öffnung 3 ist als Innenlagerfläche ausgebildet und dient zur Aufnahme beispielsweise einer Welle, welche in beiden Umfangsrichtungen drehbar in der Öffnung 3 gelagert ist.

Weiter ist an einer ersten Seite 31 der Öffnung 3 eine erste Fase 5 und an einer zweiten Seite 32 der Öffnung 3 eine zweite Fase 6 ausgebildet. Das Lagerbauteil 1 dieses Ausführungsbeispiels ist dabei als Radialgleitlager ausgebildet.

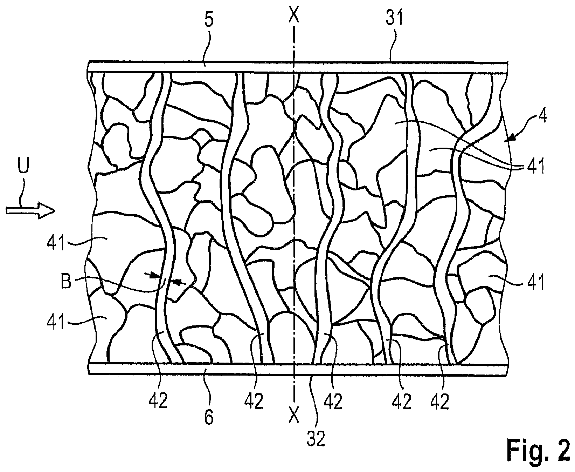

Figur 2 zeigt im Detail eine vergrößerte Ansicht einer Oberfläche der Diamantbeschichtung 4. Wie aus Figur 2 ersichtlich ist, sind an der Oberfläche der Diamantbeschichtung 4 eine Vielzahl von Diamantkristallen 41 ausgebildet. Ferner sind an der Oberfläche der Diamantbeschichtung 4 längliche Vertiefungen 42 ausgebildet, welche durchgehend von der ersten Seite 31 bis zur zweiten Seite 32 verlaufen. Die länglichen Vertiefungen 42 sind somit durchgängig in Axialrichtung X-X an der Oberfläche der Diamantbeschichtung 4 vorgesehen.

Die länglichen Vertiefungen 42 weisen dabei eine Breite B, gemessen in Umfangsrichtung, auf, welche im Wesentlichen konstant entlang der Länge der länglichen Vertiefungen 42 ist. Wie aus der Figur 2 deutlich wird, sind die länglichen Vertiefungen 42 zwischen den Diamantkristallen 41 gebildet, so dass die länglichen Vertiefungen 42 keine geradlinigen Wände und Böden aufweisen, sondern entsprechend dem Kristallwachstum gebildet sind. Trotzdem ist im Wesentlichen die Breite B über die Länge der länglichen Vertiefungen 42 als im Wesentlichen konstant anzusehen.

Die länglichen Vertiefungen 42 sind dabei im wesentlichen senkrecht zur Umfangsrichtung U gebildet. Weiterhin weisen die länglichen Vertiefungen 42 eine Tiefe auf, wobei ein Verhältnis der Tiefe zur Breite über die gesamte Länge der länglichen Vertiefung 42 im Wesentlichen konstant bleibt und ungefähr zwei beträgt. Dabei ist die Breite B der länglichen Vertiefung 42 ungefähr 1 µm und die Tiefe der länglichen Vertiefung 42 ungefähr 2 µm.

Das im Ausführungsbeispiel gezeigte Lager ist ein Radialgleitlager, wobei ein Schmierstoff, z.B. Schmieröl, auf der Diamantoberfläche vorhanden ist. Durch die länglichen Vertiefungen 42 in der Diamantbeschichtung 4 wird nun erreicht, dass der Schmierstoff auch in den länglichen Vertiefungen 42 vorhanden ist. Beim Anlaufen eines rotierenden Bauteils, bei dem im Stillstand zuerst Haftreibung vorherrscht, ergibt sich nun durch Drehen des rotierenden Bauteils eine Bewegung von Molekülen des Schmierstoffs in Richtung der Umfangsrichtung U. Dabei wirkt der jeweils in den länglichen Vertiefungen 42 befindliche Schmierstoff als Schmierstoffwall, so dass sich die Moleküle am dadurch gebildeten Schmierstoffwall aufstauen und so sehr schnell einen Schmierstofffilm bilden können. Dadurch gelingt es sehr effektiv und unerwartet, einen Druckgradienten aufzubauen, so dass eine Abhebedrehzahl, bei der das rotierende Bauteil nicht mehr in direktem Kontakt mit der Diamantbeschichtung ist, signifikant reduziert werden kann. Somit kann erfindungsgemäß ein Übergang von der Haftreibung auf die Flüssigkeitsreibung bei geringeren Drehzahlen des rotierenden Bauteils erfolgen.

Die vorliegende Erfindung ist dadurch besonders geeignet bei Anwendungsfällen, bei denen ein häufiger Start-Stopp-Betrieb vorhanden ist. Die durch das Vorsehen der länglichen Vertiefungen 42 in der Diamantbeschichtung 4 erhältlichen, unerwarteten Ergebnisse ermöglichen somit eine deutliche Verbesserung von Lagerbauteilen mit Diamantinnenbeschichtung .

### Bezugszeichenliste

- 1: Lagerbauteil
- 2: Basiskörper
- 3: Öffnung
- 4: Diamantbeschichtung
- 5: Fase
- 6: Fase
- 20: Innenlagerfläche
- 31: erste Seite
- 32: zweite Seite
- 41: Diamantkristall
- 42: längliche Vertiefung
- B: Breite
- U: Umfangsrichtung
- X-X: Axialrichtung

## Patentansprüche

1. Lagerbauteil, umfassend:
- einen Basiskörper (2), und
- eine im Basiskörper (2) gebildete Öffnung (3), an welcher eine Innenlagerfläche ausgebildet ist,
- wobei die Innenlagerfläche eine Beschichtung (4) aufweist und
- wobei die Beschichtung längliche Vertiefungen (42) aufweist, welche in der Beschichtung vorgesehen sind und im Wesentlichen in Längsrichtung (X-X) der Öffnung verlaufen,
**dadurch gekennzeichnet,**
- **dass** die Beschichtung eine Diamantbeschichtung (4) ist, und
- eine Breite (B) der länglichen Vertiefungen (42) kleiner als eine durchschnittliche Breite der Diamantkristalle (41) der Diamantbeschichtung (4) ist.

2. Lagerbauteil nach Anspruch 1, **dadurch gekennzeichnet, dass** die Öffnung (3) eine Durchgangsöffnung ist.

3. Lagerbauteil nach einem der vorhergehenden Ansprüche, **dadurch gekennzeichnet, dass** die länglichen Vertiefungen (42) durchgängig von einer ersten Seite (31) zu einer zweiten Seite (32) der Öffnung verlaufen.

4. Lagerbauteil nach einem der vorhergehenden Ansprüche, **dadurch gekennzeichnet, dass** die länglichen Vertiefungen (42) kreuzungsfrei in der Diamantbeschichtung (4) vorgesehen sind.

5. Lagerbauteil nach einem der vorhergehenden Ansprüche, **dadurch gekennzeichnet, dass** die länglichen Vertiefungen (42) im Wesentlichen parallel zueinander verlaufen.

6. Lagerbauteil nach einem der vorhergehenden Ansprüche, **dadurch gekennzeichnet, dass** die länglichen Vertiefungen (42) in ungefähr gleichen Abständen entlang eines Innenumfangs der Öffnung (3) vorgesehen sind.

7. Lagerbauteil nach einem der vorhergehenden Ansprüche, **dadurch gekennzeichnet, dass** ein Verhältnis einer Tiefe der länglichen Vertiefungen (42) zu einer Breite der länglichen Vertiefungen ungefähr zwei ist.

8. Lagerbauteil nach einem der vorhergehenden Ansprüche, **dadurch gekennzeichnet, dass** die länglichen Vertiefungen (42) mit einem Schmiermedium, insbesondere einem flüssigen Schmierstoff, gefüllt sind.

9. Lagerbauteil nach einem der vorhergehenden Ansprüche, **dadurch gekennzeichnet, dass** die Innenlagerfläche (20) des Basiskörpers (2) vollständig mit der Diamantbeschichtung 4 bedeckt ist.

10. Lagerbauteil nach einem der vorhergehenden Ansprüche, **dadurch gekennzeichnet, dass** das Lagerbauteil ein Radialgleitlager ist.

## Claims

1. Bearing component, comprising:
- a base body (2), and
- an opening (3) which is formed in the base body (2) and on which an internal bearing surface is formed,
- wherein the internal bearing face has a coating (4) and
- wherein the coating has elongate depressions (42) which are provided in the coating and extend substantially in the longitudinal direction (X-X) of the opening,
**characterized in that**,
- the coating is a diamond coating (4), and
- a width (B) of the elongate depressions (42) is less than an average width of the diamond crystals (41) of the diamond coating (4).

2. Bearing component according to claim 1, **characterized in that** the opening (3) is a through-opening.

3. Bearing component according to any one of the preceding claims, **characterized in that** the elongate depressions (42) extend continuously from a first side (31) to a second side (32) of the opening.

4. Bearing component according to any one of the preceding claims, **characterized in that** the elongate depressions (42) are provided without crossing in the diamond coating (4).

5. Bearing component according to any one of the preceding claims, **characterized in that** the elongate depressions (42) extend substantially parallel to each other.

6. Bearing component according to any one of the preceding claims, **characterized in that** the elongate depressions (42) are provided at approximately equal distances along an internal circumference of the opening (3).

7. Bearing component according to any one of the preceding claims, **characterized in that** a ratio of the depth of the elongate depressions (42) to a width of the elongate depressions is approximately two.

8. Bearing component according to any one of the preceding claims, **characterized in that** the elongate depressions (42) are filled with a lubricant, in particular a liquid lubricant.

9. Bearing component according to any one of the preceding claims, **characterized in that** the internal bearing surface (20) of the base body (2) is completely covered with the diamond coating 4.

10. Bearing component according to any one of the preceding claims, **characterized in that** the bearing component is a radial sliding bearing.

## Revendications

1. Composant de palier, comprenant :
- un corps de base (2), et
- une ouverture (3) formée dans le corps de base (2), au niveau de laquelle est réalisée une surface de palier intérieure,
- dans lequel la surface de palier intérieure présente un revêtement (4) et
- dans lequel le revêtement présente des renfoncements (42) allongés, qui sont prévus dans le revêtement et s'étendent sensiblement dans la direction longitudinale (X - X) de l'ouverture,
**caractérisé en ce**
- **que** le revêtement est un revêtement de diamant (4), et
- une largeur (B) des renfoncements (42) allongés est inférieure à une largeur moyenne des cristaux de diamant (41) du revêtement de diamant (4).

2. Composant de palier selon la revendication 1, **caractérisé en ce que** l'ouverture (3) est une ouverture de passage.

3. Composant de palier selon l'une quelconque des revendications précédentes, **caractérisé en ce que** les renfoncements (42) allongés s'étendent en continu depuis un premier côté (31) vers un deuxième côté (32) de l'ouverture.

4. Composant de palier selon l'une quelconque des revendications précédentes, **caractérisé en ce que** les renfoncements (42) allongés sont prévus sans se croiser dans le revêtement de diamant (4).

5. Composant de palier selon l'une quelconque des revendications précédentes, **caractérisé en ce que** les renfoncements (42) allongés s'étendent sensiblement de manière parallèle les uns par rapport aux autres.

6. Composant de palier selon l'une quelconque des revendications précédentes, **caractérisé en ce que** les renfoncements (42) allongés sont prévus selon des espacements approximativement identiques le long d'une périphérie intérieure de l'ouverture (3).

7. Composant de palier selon l'une quelconque des revendications précédentes, **caractérisé en ce qu'**un rapport entre une profondeur des renfoncements (42) allongés et une largeur des renfoncements allongés est approximativement égal à 2.

8. Composant de palier selon l'une quelconque des revendications précédentes, **caractérisé en ce que** les renfoncements (42) allongés sont remplis d'un milieu de lubrification, en particulier d'un lubrifiant liquide.

9. Composant de palier selon l'une quelconque des revendications précédentes, **caractérisé en ce que** la surface de palier intérieure (20) du corps de base (2) est recouverte en totalité du revêtement en diamant (4).

10. Composant de palier selon l'une quelconque des revendications précédentes, **caractérisé en ce que** le composant de palier est un palier lisse radial.
